# EUROPÄISCHE PATENTSCHRIFT

(11) **EP 2 063 337 B1**
(45) Veröffentlichungstag und Bekanntmachung des Hinweises auf die Patenterteilung: **15.02.2012**
(21) Anmeldenummer: 08019453.3
(22) Anmeldetag: 06.11.2008
(51) Int. Cl.: G05B 19/418, H04W 16/14

(54) **Verfahren zur Erkennung von Störquellen für Automatisierungseinrichtungen und Störquellenerkennungseinheit hierzu**
Method of detecting sources of interference on automation devices and unit for detecting sources of interference for same
Procédé de reconnaissance de sources de perturbation pour dispositifs d'automatisation et unité de reconnaissance de sources de perturbation correspondante

(30) Priorität: 14.11.2007 DE 102007054678
(43) Veröffentlichungstag der Anmeldung: 27.05.2009
(73) Patentinhaber: Wago Verwaltungsgesellschaft mbH, 32423 Minden (DE)
(72) Erfinder: Vedral, Andreas, 44577 Castrop-Rauxel (DE)
(74) Vertreter: Gerstein, Hans Joachim

(56) Entgegenhaltungen:
- EP-A1- 1 225 709
- DE-A1-102006 009 979
- US-A1- 2006 171 327

## Beschreibung

Die Erfindung betrifft ein Verfahren zur Erkennung von Störquellen für Automatisierungseinrichtungen, die eine Vielzahl von über einen Datenbus miteinander gekoppelter Ein-/Ausgabemodule haben, von denen mindestens eines als Funk-Ein-/Ausgabemodul zur Funkdatenkommunikation eingerichtet ist, wobei das mindestens eine Funk-Ein-/Ausgabemodul die Verfügbarkeit von Übertragungskanälen zur Funkdatenübertragung ständig wiederholt überprüft und die Verfügbarkeit einer Folge von Übertragungskanälen in einer Kanalliste abspeichert.

Die Erfindung betrifft weiterhin eine Störquellenerkennungseinheit mit einer Vergleichseinheit, einem Datenspeicher und einer Datenbus-Kommunikationseinheit, die zur Datenkommunikation mit Funk-Ein-/Ausgabemodulen einer Automatisierungseinrichtung über einen Datenbus eingerichtet ist.

Herkömmliche Automatisierungseinrichtungen, bei denen über einen Feldbus eine Vielzahl von Ein-/Ausgabemodulen miteinander gekoppelt sind, enthalten oftmals auch Funk-Ein-/Ausgabemodule zur Funkdatenkommunikation. Diese industriellen, beispielsweise in DE 10 2006 009 979 A1 beschriebenen Funklösungen basieren sehr häufig auf Standardtechnologien aus dem Konsumerbereich. Klassische Standardtechnologien sind IEEE 802.15.1 (Bluetooth) und IEEE 802.11 (WLAN) sowie weitere proprietäre Technologien, die in jeweiligen Frequenzbereichen, wie insbesondere im 2,4 GHz-ISM-Frequenzband operieren. Entsprechend kann es vorkommen, dass sich die Funksysteme, sofern diese in geringer Entfernung zueinander kommunizieren, wechselseitig stören. Die Funkdatenkommunikation ist in industriellen Automatisierungseinrichtungen, insbesondere deshalb problematisch, weil oftmals parallel hierzu WLAN-Funknetzwerke eingerichtet sein können und zudem module Konsumergeräte, wie PDAs, Notebooks etc., Mobiltelefone etc., Funktechnologien mit 2,45 GHz-ISM-Frequenzband integriert haben. Für den Betrieb einer industriellen Automatisierungseinrichtung mit Funk-Ein-/Ausgabemodulen ist die Klärung der Frage wichtig, ob ein paralleler Betrieb unterschiedlicher Funklösungen im gleichen Frequenzbereich ohne Reduzierung der Übertragungszuverlässigkeit möglich ist. Dies kann z. B. durch exklusive Nutzung von Teilen des ISM-Frequenzbandes durch das jeweils ein Funknetzwerk sichergestellt werden. Für den Anwender von industriellen Funklösungen ist daher von großer Wichtigkeit, Kenntnisse über die Belegung des Frequenzspektrums zu erlangen. Damit können einerseits Störeinflüsse. erkannt werden, andererseits kann vermieden werden, koexistierende Funklösungen unbewusst zu stören. Bereits während der Installationsphase industrieller Funklösungen besteht daher ein Bedarf, potentielle Störquellen frühzeitig zu erkennen, um mit adäquaten Maßnahmen darauf reagieren zu können. Derartige Maßnahme können beispielsweise die Einstellung eines anderen Frequenzkanals, die Veränderung der Installationsposition von Sender und Empfänger oder der Einsatz von Antennen mit Richtwirkungen sein.

EP 1 449 397 B1 offenbart ein Verfahren zu Störungsmessungen an drahtlosen Kommunikationssystemen, bei dem überwacht wird, ob ein Träger frei ist. Eine gegenseitige Störung unterschiedlicher Funksysteme soll vermieden werden, indem ein Kanal durch Interferenzmessung durch weniger gestörten ersetzt wird. Durch Interferenz gestörte Kanäle werden durch eine kontinuierliche oder quasi-kontinuierliche Interferenzmessung detektiert.

US 2006/0171327 A1offenbart ein Verfahren zur Erkennung von einer Störquelle in drahtlosen Netzwerken. Um Störungen von der normalen Kommunikation unterscheiden zu können, wird ein Ruheintervall eingeführt, in dem die normale Kommunikation unterbrochen ist. Störquellen können zum Beispiel anhand von Pulsperioden und Pulsdauern in den Ruheintervallen erkannt werden.

EP 1 225 709 A1 beschreibt ein Frequenzsprungverfahren für drahtlose Netzwerke. Dabei werden mehrere Kanäle eines Frequenzbandes untersucht und als guter oder schlechter Kanal gekennzeichnet. Die Größe eines Fensters mit guten Kanälen und eines Fensters mit schlechten Kanälen wird festgestellt und es werden mehrere gute Kanäle einem guten Fenster und eine Vielzahl von schlechten Kanälen am schlechten Fenster zugewiesen.

EP 1 717 997 A1 offenbart ein Verfahren zur Verminderung von Störungen in Nahbereichs-Funknetzen durch andere Geräte im gleichen Frequenzband. Durch Interferenz gestörte Kanäle des Bluetooth-Netzes werden vom Datenverkehr ausgeschlossen und die verbleibenden Kanäle werden von einer Kanalsteuerung auf mehrere Bluetooth-Netze aufgeteilt. Die Erkennung von Störungen erfolgt mit einer Kanalmesseinheit, die Interferenzen detektiert und Interferenzinformationen an einem Kanalcontroller übermittelt.

Aufgabe der vorliegenden Erfindung ist es daher, ein Verfahren zu schaffen, mit dem mit geringstmöglichem Zusatzaufwand Störquellen von Automatisierungseinrichtungen unter Ausnützung der in den Automatisierungseinrichtungen ohnehin vorhandenen Funktionalitäten Störquellen erkannt werden können.

Die Aufgabe wird mit dem eingangs genannten Verfahren gelöst durch
- Auslesen der in den Kanallisten des mindestens einen Funk-Ein-/Ausgabemoduls aktuell abgespeicherten Verfügbarkeit von Kanälen,
- Vergleichen der Verfügbarkeit der Folge von Kanälen mit einer Anzahl von für eine Anzahl unterschiedlicher Störquellen abgespeicherter Störquellen-Kanalmustern und
- Erkennen einer Störquelle, wenn das durch die Verfügbarkeit der Folge von Kanälen definierte Kanalmuster eine vorgegebene Mindestähnlichkeit zu einem der abgespeicherten Störquelle-Kanalmuster aufweist.

Es wird somit vorgeschlagen, die in Funk-Ein-/Ausgabemodulen ohnehin verfügbare Information über die in Kanallisten enthaltene Verfügbarkeit von Kanälen mindestens eines interessierenden Frequenzbandes zu nutzen, indem die Verfügbarkeit einer Folge von Übertragungskanälen aus Funk-Ein-/Ausgabemodulen ausgelesen wird, die Ober einen Datenbus miteinander in einer Automatisierungseinrichtung vernetzt sind. Die in der mindestens einen ausgelesenen Kanalliste enthaltenen Informationen werden dann ausgewertet, indem ein Vergleich mit charakteristischen Störquellen-Kanalmustern bekannter Störquellen durchgeführt wird. Sobald eine vorgegebene Mindestähnlichkeit zwischen dem in der ausgelesenen Kanalliste spezifizierten Kanalmuster und einem der abgespeicherten Störquellen-Kanalmuster erreicht ist, kann auf die dem ähnlichen Störquellen-Kanalmuster zugeordneten Störquelle geschlossen werden.

Das Verfahren nutzt aus, dass Standardtechnologien zur Funkdatenkommunikation ohnehin in der Regel eine Verfügbarkeitsmessung von Kanälen durchführen, um in einem definierten, Frequenzband eine Datenübertragung nur in den verfügbaren, ungestörten Kanälen durchzuführen. So nutzt beispielsweise die Bluetooth-Technologie, zur Verringerung von Interferenzen anderer aktiver Störquellen im 2,45 GHz-ISM-Frequenzband das sogenannte, "Slow Frequency Hopping Spread Spectrum" (SFHSS)-Verfahren. Hierbei.wird das 2,45 GHz-ISM-Frequenzband in 79 logische Kanäle mit einer Bandbreite von 1 MHz aufgeteilt. Zur Übertragung jeweils eines Datenpakets wird exklusiv ein logischer Kanal genutzt. Danach wird pseudo-zufällig ein anderer Kanal aus den 79 möglichen Kanälen berechnet, der zur Übertragung des nachfolgenden Datenpakets verwendete wird. Insofern wird die Wahrscheinlichkeit - reduziert, dass Datenpaketkollisionen - zwischen koexistierenden Funklösungen auftreten, bzw. andere aktive Störquellen interferieren.

Ab der Spezifikation V1.2 verfügt die Bluetooth-Technologie über ein adaptives Frequenzsprungverfahren, bei dem die logischen Kanäle anhand spektraler Störleistungen im 2,45 GHz - ISM-Frequenzband während des aktiven Datenaustauschs bewertet werden. Falls in einem oder mehreren der 79 Kanäle Störungen erkannt werden, wird durch das Bluetooth-System der mindestens eine gestörte Kanal aus der Frequenzsprungfolge ausgeschlossen. Die Kommunikation wird darin auf den verbleibenden Kanälen weitergeführt. Der aktuelle Status der verfügbaren, Kanäle kann aus dem Bluetooth-Transceiver über das standardisierte Host. Controller Interface" (HCl) abgefragt werden. Hierzu kann das HCl-Kommando "Read_AFH_Channel_Map" genutzt werden, das in Form einer Bitmaske auf die Existenz von Kanalstörungen hinweisen kann. Eine binäre "0" an einer Bitposition signalisiert einen (unbenutzbaren) Kanal, der aktuell aktiven Störeinflüssen unterliegt und für eine Kommunikation ausgeblendet wurde. Eine binäre "1" hingegen zeigt an, dass der Kanal ungestört ist.

Eine solche Bitmaske für die 79 Kanäle des 2,45 GHz ISM-Frequenzbandes kann somit als Kanalliste genutzt werden, indem nicht nur, wie aus der Bluetooth-Technologie bekannt, einzelne Kanäle zur Datenkommunikation ausgeblendet werden. Vielmehr weisen die Bitmasken (Kanallisten) im Falle des Vorhandenseins von Störquellen charakteristische Bitmuster auf, die gemäß der Lehre der vorliegenden Erfindung zur Erkennung von Störquellen ausgewertet werden.

Damit ist es möglich, nicht nur aktive Störquellen zu identifizieren, sondern auch auf die Art der Störquellen zu schließen. Da dafür bekannte Störquellenarten-Kanalmuster hinterlegt - sind, kann bei Vorliegen einer gewissen Ähnlichkeit des Kanallistenmusters mit einem hinterlegten Störquellen-Kanalmuster auf dem Störquellen-Känalmuster zugeordnete Störquellenart geschlossen werden.

Das Bewerten der logischen Übertragungskanäle durch die Funk-Ein-/Ausgabemodule der Automatisierungseinrichtung erfolgt vorzugsweise anhand der spektralen Störleistungen im jeweiligen Frequenzband, für das die Funk-Ein-/Ausgabemodule eingerichtet sind. Für den Fall, dass ein Funk-Ein-/Ausgabemodul beispielsweise eine Funkdatenkommunikation nach dem Bluetooth-Standard durchführt, werden die spektralen Störleistungen im 2,45 GHz ISM-Frequenzband bewertet. Die einzelnen Kanäle des Frequenzbandes werden dann mit einer Bitcodierung als ungestörter oder gestörter Kanal gekennzeichnet und diese Bitcodierung der Kanäle eines Frequenzbandes wird dann als Kanalmuster an eine Störquellenerkennungseinheit übertragen, die über ein Funk-Ein-/Ausgabemodul verbunden ist. In der Störquellenerkennungseinheit wird dann das mindestens eine Kanalmuster, vorzugsweise eine Vielzahl von Kanalmustern mehrerer in der Automatisierungseinrichtung - vorhandene Funk-Ein-/Ausgabemodule ausgewertet.

Die Art einer Störquelle kann anhand des Verlaufs der gestörten Kanäle erkannt werden. Der charakteristische Verlauf des Spektrums einer Störquelle kann beispielsweise durch Störleistungen bei bestimmten, nicht aneinander angrenzenden Frequenzbändern gekennzeichnet sein.

Die Erkennung der Art einer Störquelle kann auch anhand der Frequenzbandbreite von einer Folge aneinander angrenzender kontinuierlich gestörter Kanäle erfolgen. So lassen beispielsweise kontinuierlich gestörte Frequenzbereiche mit einer Breite von 3 MHz auf ein IDEE 802.15.4 O-QPSK-basierendes Funksystem schließen. Ein WLAN-Funksystem nach IEEE 802.11 B/G emittiert hingegen Störungen, von denen ein etwa 20 MHz breite Spektrum betroffen ist.

Mikrowellensysteme hingegen können durch zwei spektrale Signalanteile eine Bandbreite von jeweils etwa 10 MHz charakterisierbar sein. Sie haben somit eine charakteristischen spektralen Verlauf.

Aufgabe der vorliegenden Erfindung ist weiterhin, eine verbesserte Störquellenerkennungseinheit zu schaffen, mit der auf preiswerte und einfache Weise eine Erkennung von Störquellen in einer Automatisierungseinrichtung durchgeführt werden kann. Die Durchführung wird mit der Störquellenerkennungseinheit der eingangs genannten Art dadurch gelöst, dass die Datenkommunikationseinheit weiterhin zum Auslesen von in Kanallisten von . angeschlossenen Funk-Ein-/Äusgabemodulen aktuell abgespeicherten Kanalmustern, die die Verfügbarkeit von Übertragungskanälen zur Funkdatenübertragung kennzeichnen, eingerichtet ist, und dass die Vergleichseinheit zum Vergleichen der Verfügbarkeit der Folge von Kanälen mit einer Anzahl von für eine Anzahl unterschiedlicher Störquellen abgespeicherter Störquellen-Kanalmustern und Erkennen einer Störquelle, wenn das durch die Verfügbarkeit der Folge von Kanälen definierte Kanalmuster eine vorgegebene Mindestähnlichkeit zu einem der abgespeicherten Störquellen-Kanalmuster aufweist, eingerichtet ist.

Vorteilhafte Ausführungsformen sind in den Unteransprüchen beschirieben.

Die Erfindung wird nachfolgend anhand eines Ausführungsbeispiels mit den beigefügten Zeichnungen näher erläutert. Es zeigen:
- Figur 1: -Blockdiagramm einer Starquellenerkennungseinheit einer Automatisierungseinrichtung;
- Figur 2: - charakteristisches Spektrum und Bitmuster einer WLAN- Störquelle;
- Figur 3: - Spektrum und Bitmuster einer Mikrowellen-Störquelle;
- Figur 4: - Spektrum und Frequenzmuster einer O-QPSK-Störquelle.

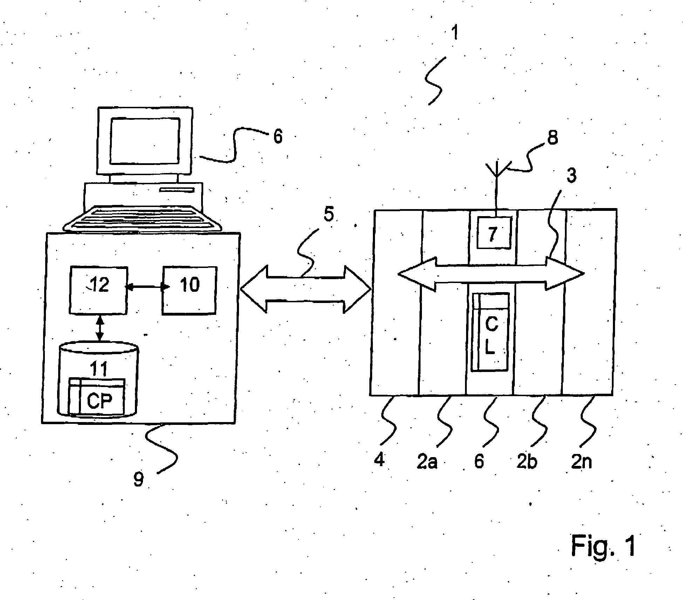

Figur 1 lässt eine Automatisierungseinrichtung 1 erkennen, die in an sich bekannter Weise eine Vielzahl von Ein-/Ausgabemodulen 2a, 2b ..., 2n hat, die über einen Datenbus 3 miteinander vernetzt sind, Die Folge von Ein-/Ausgabemodulen 2a, 2b ..., 2n kann über einen Feldbuskoppler 4 an einen Feldbus 5 angeschlossen werden, um diesen mit einer übergeordneten Steuerungseinheit 6 zu verbinden.

Die Automatisierungseinrichtung 1 kann auf diese Weise beispielsweise 1, 2, 3 oder mehr Zusammenstellungen von Feldbuskoppler 4 und Ein-/Ausgabemodulen 2 haben. Eine solche Folge von Feldbuskoppler 4 und Ein-/Ausgabemodulen 2a, 2b ....2n wird beispielsweise nebeneinander angrenzend auf eine Hutschiene aufgesetzt.

Eine Auswahl von Ein-/Ausgabemodulen 2a, 2b ..., 2n kann dabei zur Funkdatenkommunikation ausgebildet sein und ein jeweils spezielles Funk-Ein-/Ausgabemodul 6 bilden, das bezüglich einer Sende-/Empfangseinheit 7 und einer Antenne 8 über Funk mit anderen Teilnehmern der Automatisierungseinrichtung 1 kommuniziert.

Die Automatisierungseinrichtung 1 hat weiterhin eine Störquellenerkennungseinheit 9, die in die zentrale Steuerungseinheit 6 integriert sein kann oder auch ein separates, an den Datenbus 3 oder den Feldbus 5 anschiießbares Störquellenerkennungsmodul sein kann. Die Störquellenerkennungseinheit 9 kann aber auch in den Feldbuskoppler 4 oder in ein Ein-/Ausgabemodul 2a, 2b ..., 2n oder ein Funk-Ein-/Ausgabemodul 6 integriert werden.

Die Störquellenerkannungseinheit 9 hat eine Datenbus-Kommunikationseinheit 10 mit einer Schnittstelle und einem Schnittstellenkontroller zur Datenkommunikation mit Funk-Ein-/Ausgabemodulen 6 der Automatisierungseinrichtung 1 über den Datenbus 3,5. - Weiterhin hat die Störquellenerkennungseinheit 9 einen Datenspeicher 11, in dem charakteristische Störquellen=Kanalmuster bekannter Störquellenabgespeichert sind. Eine Vergleichseinheit 12 der Störquellenerkennungseinheit 9 greift auf den Datenspeicher 11 und die Datenbus-Kommunikationseinheit 10 zu, um einerseits die abgespeicherten Störquellen-Kanalmuster aus dem Datenspeicher 11 und andererseits Kanallisten CL von angeschlossenen Funk-Ein-/Ausgabemodulen 6 auszulesen und miteinander zu vergleichen. Die aus den Funk-Ein-/Ausgabemodulen.6 ausgelesenen Kanallisten CL enthalten Informationen über die Verfügbarkeit einer Folge von Übertragungskanälen eines Frequenzbandes. Die einzelnen Kanäle des Frequenzbandes sind dabei mit einer Bitcodierung als ungestörter oder gestörter Kanal gekennzeichnet .

Anhand eines Vergleichs des durch die Bitcodierung einer der ausgelesenen Kanallisten CL gebildeten Musters mit abgespeicherten Störquellen-Kanalmustern wird von der Vergleichseinheit 12 auf das Vorliegen von Störquellen und deren Art in der Umgebung der Automatisierungseinrichtung geschlossen, ohne dass zusätzlicher messtechnischer Aufwand sowie zusätzliche Hardware erforderlich ist.

Vielmehr werden die in den Funk-Ein-/Ausgabemodulen 6 ohnehin verfügbarem Informationen über die Verfügbarkeit von Kanälen genutzt. Die Tatsache, dass die Bitcodierungen der Folge von Kanälen eines Frequenzbandes für bestimmte Störer charakteristische Muster annehmen, wird zur Erkennung des Vorliegens und der Art von Störquellen eingesetzt.

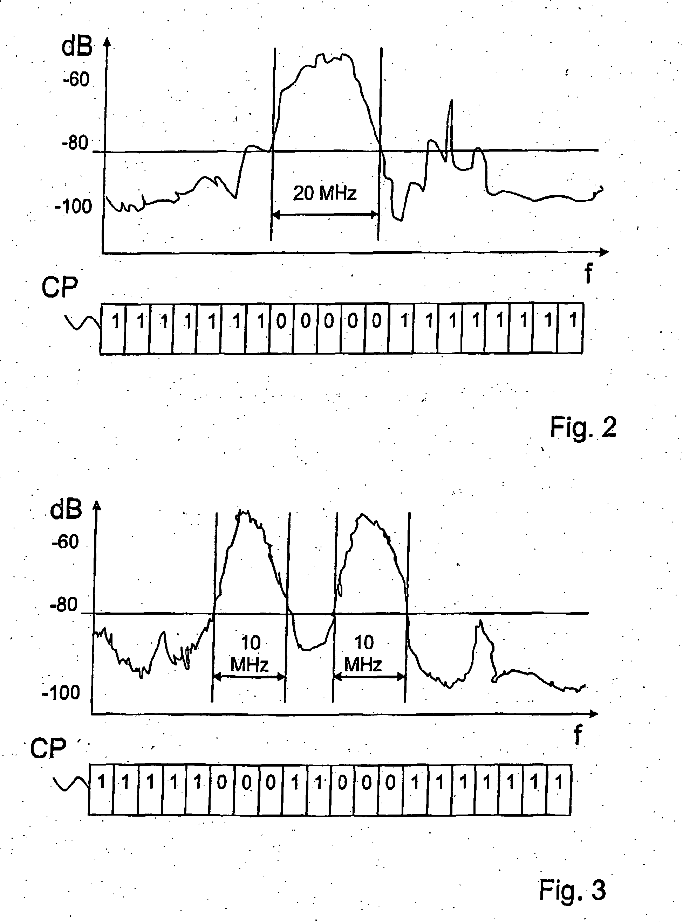

Figur 2 lässt eine Skizze eines Diagramms des Spektrums eines charakteristischen Spektrums eines WLAN-Funksystems nach IEEE 802.11 b/g erkennen. Ein solches WLAN-Funksignal im 2,4 GHz ISM-Frequenzband weist einen Frequenzbandbereich einer Bandbreite von etwa 20 MHz auf. Die zugehörige Kanalliste CL bzw. Störquellen-Kanalmuster CP enthält ein Bitmuster, bei dem jeder Kanal binär codiert ist. Einer der Werte "0" signalisiert einen unbenutzten Kanal, d.h. der Kanal unterliegt aktuell aktiven Störeinflüssen und wurde für eine Kommunikation ausgeblendet. Der Wert "1" hingegen zeigt an, dass der Kanal ungestört ist.

Bei einem solchen WLAN-Funksystem sind charakteristischer Weise etwa 20 aufeinanderfolgende Bitpositionen mit dem Wert "0" belegt. Anhand dieses charakteristischen Störquellen-Kanalmusters CP kann nunmehr im Vergleich zu einer von einem Funk-Ein-/Ausgabemodul 6 ausgelesenen Bitfolge das Vorliegen eines WLAN-Funksystems in der Umgebung einer Automatisierungseinrichtung erkannt werden.

Figur 3 lässt ein Diagramm und ein Störquellen-Kanalmuster CP erkennen, das für Mikrowellensysteme charakteristisch ist. Typischerweise besitzen Mikrowellensysteme ein Spektrum, das die Mittelfrequenz von 2,45 GHz durch 2 spektrale Signalanteile einer Bandbreite von jeweils 10 MHz charakterisierbar ist. Denkbar ist, dass andere Störquellen Mikrowellenemissionen mit anderen charakteristischen Signalverläufen imitieren.

Erkennbar ist in dem beispielhaften Spektrum einer Mikrowellenemission, dass der Signalpegel in zwei nicht aneinander angrenzenden Frequenzbändern in einer Bandbreite von etwa 10 MHz einen signifikant höheren Signalpegel aufweist.

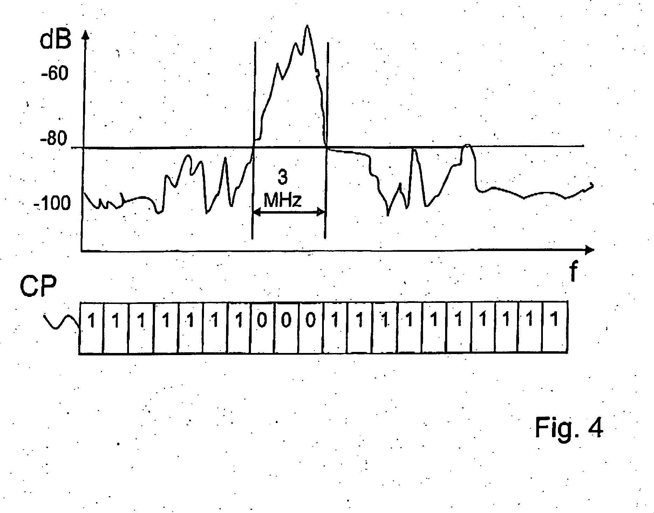

Figur 4 lässt die Skizze eines Diagramms eines Spektrums eines IEEE 802.15.4 O-OPSK>-Signals im 2,4 GHz ISM-Frequenzbereich sowie ein zugehöriges Störquellen-Kanalmuster CP erkennen. Es wird deutlich, dass das Signal eine Bandbreite von etwa 3 MHz einen Signalpegel von mehr als etwa - 65 dB aufweist.

In entsprechender Weise können für eine Vielzahl von Störquellen charakteristische Spektren des von der Störquelle emittierten Signals und zugeordneter binärer Störquellen-Kanalmuster CP erfasst werden, die zum Vergleich mit den Bitcodierungen der ausgelesenen Kanallisten CL herangebogen werden können.

## Patentansprüche

1. Verfahren zur Erkennung von Störquellen für Automatisierungseinrichtungen (1), die eine Vielzahl von über einen Datenbus (3) miteinander gekoppelte Ein-/Ausgabemodule (2) haben, von denen mindestens eines als Funk-Ein-/Ausgabemodul (6) zur Funkdatenkommunikation eingerichtet ist, wobei das mindestens eine Funk-Ein-/Ausgabemodul (6) die Verfügbarkeit von Übertragungskanälen zur Funkdatenübertragung ständig wiederholt überprüft und die Verfügbarkeit einer Folge von Übertragungskanälen in einer Kanalliste CL abspeichert, **gekennzeichnet durch**
- Auslesen der in den Kanalliste (CL) des mindestens einen Funk-Ein-/Ausgabemoduls (6) aktuell abgespeicherten Verfügbarkeit von Kanälen,
- Vergleichen der Verfügbarkeit der Folge von Kanälen mit einer Anzahl von für eine Anzahl unterschiedlicher Störquellen abgespeicherten Störquellen-Kanalmustern (CP) und
- Erkennen einer Störquelle, wenn das **durch** die Verfügbarkeit der Folge von Kanälen definierte Kanalmuster eine vorgegebene Mindestähnlichkeit zu einem der abgespeicherten Störquellen-Kanalmuster (CP) aufweist.

2. Verfahren nach Anspruch 1, **gekennzeichnet durch** Ermitteln der Art einer Störquelle aus bekannten Störquellenarten, die den abgespeicherten Störquellen-Kanalmustern (CP) zugeordnet sind.

3. Verfahren nach Anspruch 1 oder 2, **gekennzeichnet durch** Bewerten der logischen Übertragungskanäle **durch** die Funk-Ein-/Ausgabemodule (6) anhand der spektralen Störleistungen im jeweiligen Frequenzband, für das die Funk-Ein-/Ausgabemodule (6) eingerichtet sind, und Kennzeichnen der einzelnen Kanäle des Frequenzbandes mit einer Bitcodierung als ungestörten oder gestörten Kanal und Übertragen des durch die Bitcodierung der Kanäle eines Frequenzbandes definierten Kanalmusters zum Vergleich mit einem abgespeicherten Störquellen-Kanalmuster (CP) an einer Störquellenerkennungseinheit, die über einen Datenbus (3) mit den Ein-/Ausgabemodulen (2) verbunden ist.

4. Verfahren nach einem der vorhergehenden Ansprüche, **gekennzeichnet durch** Erkennen der Art einer Störquelle anhand des Verlaufs der gestörten Kanäle.

5. Verfahren nach einem der vorhergehenden Ansprüche, **gekennzeichnet durch** Erkennen der Art einer Störquelle anhand der Frequenzbandbreite von einer Folge aufeinander angrenzender kontinuierlich gestörter Kanäle.

6. Störquellenerkennungseinheit (9) mit einer Vergleichseinheit (12), einem Datenspeicher (11) und einer Datenbus-Kommunikationseinheit (10), die zur Datenkommunikation mit Funk-Ein-/Ausgabemodulen (6), einer Automatisierungseinrichtung (1) über einen Datenbus (3) eingerichtet ist, **dadurch gekennzeichnet, dass** die Datenbus-Kommunikationseinheit (10) weiterhin zum Auslesen von in Kanallisten (CL) angeschlossener Funk-Ein-/Ausgabemodule (6) aktuell abgespeicherten Kanalmustern, die die Verfügbarkeit von Übertragungskanälen zur Funkdatenübertragung kennzeichnen, eingerichtet ist, und dass die Vergleichseinheit (12) zum Vergleichen der Verfügbarkeit der Folge von Kanälen mit einer Anzahl von für eine Anzahl unterschiedlicher Störquellen abgespeicherten Störquellen-Kanalmustern (CP) und Erkennen einer Störquelle, eingerichtet ist, wenn das durch die Verfügbarkeit der Folge von Kanälen definierte Kanalmuster eine vorgegebene Mindestähnlichkeit zu einem der abgespeicherten Störquellen-Kanalmuster (CP) aufweist.

7. Störquellenerkennungseinheit (9) nach Anspruch 6, **dadurch gekennzeichnet, dass** die Vergleichseinheit (12) weiterhin zum Ermitteln der Art einer Störquelle aus bekannten Störquellenarten eingerichtet ist, die den abgespeicherten Störquellen-Kanalmustern (CP) zugeordnet sind.

8. Störquellenerkennungseinheit (9) nach Anspruch 6 oder 7, **dadurch gekennzeichnet, dass** die Vergleichseinheit (12) zum Vergleichen von bitcodierten Kanalmustern eingerichtet ist, wobei die einzelnen Kanäle zum Frequenzbandes mit einer Bitcodierung als ungestörter oder gestörter Kanal **gekennzeichnet** ist und die Störung eines Kanals durch die spektrale Störleistung im jeweiligen Frequenzband bestimmt würde.

9. Störquellenerkennungseinheit (9) nach einem der Ansprüche 6 bis 8, **dadurch gekennzeichnet, dass** die Vergleichseinheit (12) zum Erkennen der Art einer Störquelle anhand des spektralen Verlaufs der gestörten Kanäle eingerichtet ist.

10. Störquellenerkennungseinheit (9) nach einem der Ansprüche 6 bis 9, **dadurch gekennzeichnet, dass** die Vergleichseinheit (12) zum Erkennen der Art einer Störquelle anhand der Frequenzbandbreite von einer Folge aneinander angeordneter kontinuierlich gestörter Kanäle eingerichtet ist

## Claims

1. Method for identifying noise sources for automation devices (1) which have a multiplicity of input/output modules (2) which are coupled to one another by means of a data bus (3) and at least one of which is set up as a radio input/output module (6) for radio data communication, wherein the at least one radio input/output module (6) repeatedly checks the availability of transmission channels for radio data transmission on a continual basis and stores the availability of a sequence of transmission channels in a channel list (CL), **characterized by**
- the availability of channels which is currently stored in the channel lists (CL) of the at least one radio input/output module (6) being read,
- the availability of the sequence of channels being compared with a number of noise source channel patterns (CP) which are stored for a number of different noise sources, and
- a noise source being identified if the channel pattern defined by the availability of the sequence of channels has a prescribed minimum similarity with one of the stored noise source channel patterns (CP).

2. Method according to Claim 1, **characterized by** the type of a noise source being ascertained from known noise source types which are associated with the stored noise source channel patterns (CP).

3. Method according to Claim 1 or 2, **characterized by** the logical transmission channels being rated by the radio input/output modules (6) using the spectral noise powers in their respective frequency band for which the radio input/output modules (6) are set up, and the individual channels in the frequency band being flagged as a noise-free or noisy channel by means of bit encoding and the channel pattern defined by the bit encoding for the channels in a frequency band being transmitted for the purpose of comparison with a stored noise source channel pattern (CP) on a noise source identification unit which is connected to the input/output modules (2) by means of a data bus (3).

4. Method according to one of the preceding claims, **characterized by** the type of a noise source being identified using the profile of the noisy channels.

5. Method according to one of the preceding claims, **characterized by** the type of a noise source being identified using the frequency bandwidth of a sequence of adjacent continuously noisy channels.

6. Noise source identification unit (9) having a comparison unit (12), a data store (11) and a data bus communication unit (10) which is set up for data communication with radio input/output modules (6) of an automation device (1) by means of a data bus (3), **characterized in that** the data bus communication unit (10) is also set up to read channel patterns which are currently stored in channel lists (CL) of connected radio input/output modules (6) and which flag the availability of transmission channels for radio data transmission, and **in that** the comparison unit (12) is set up to compare the availability of the sequence of channels with a number of noise source channel patterns (CP) stored for a number of different noise sources and to identify a noise source if the channel pattern defined by the availability of the sequence of channels has a prescribed minimum similarity with one of the stored noise source channel patterns (CP).

7. Noise source identification unit (9) according to Claim 6, **characterized in that** the comparison unit (12) is also set up to ascertain the type of a noise source from known noise source types which are associated with the stored noise source channel patterns (CP).

8. Noise source identification unit (9) according to Claim 6 or 7, **characterized in that** the comparison unit (12) is set up to compare bit-encoded channel patterns, wherein the individual channels in the frequency band have been flagged as a noise-free or noisy channel by means of bit encoding and the noise on a channel has been determined by the spectral noise power in the respective frequency band.

9. Noise source identification unit (9) according to one of Claims 6 to 8, **characterized in that** the comparison unit (12) is set up to identify the type of a noise source using the spectral profile of the noisy channels.

10. Noise source identification unit (9) according to one of Claims 6 to 9, **characterized in that** the comparison unit (12) is set up to identify the type of a noise source using the frequency bandwidth of a sequence of adjoining continuously noisy channels.

## Revendications

1. Procédé de détection de sources de brouillage pour des dispositifs d'automatisation (1) qui comporte une pluralité de modules d'entrée/sortie (2) couplés les uns aux autres par l'intermédiaire d'un bus de données (3), dont au moins l'un est conçu en tant que module d'entrée/sortie radio (6) pour la communication de données radio, dans lequel l'au moins un module d'entrée/sortie radio (6) vérifie constamment et de manière répétée la disponibilité de canaux de transmission destinés à la transmission de données radio et stocke la disponibilité d'une suite de canaux de transmission dans une liste des canaux CL, **caractérisé par**
- la lecture de la disponibilité de canaux stockée à l'instant présent dans la liste de canaux (CL) de l'au moins un module d'entrée/sortie radio (.6),
- la comparaison de la disponibilité de la suite de canaux à un certain nombre de modèles de canaux sources de brouillage (CP) différents stockés pour un certain nombre de sources de brouillage différentes, et
- la détection d'une source de brouillage lorsque le modèle de canal défini par la disponibilité de la suite de canaux présente une ressemblance minimale prédéterminée à l'un des modèles de canaux sources de brouillage (CP) stockés.

2. Procédé selon la revendication 1, **caractérisé par** la détermination du type d'une source de brouillage parmi des types connus de sources de brouillage qui sont associés aux modèles de canaux sources de brouillage stockés (CP).

3. Procédé selon la revendication 1 ou 2, **caractérisé par** l'évaluation des canaux de transmission logiques par l'intermédiaire des modules d'entrée/sortie radio (6) sur la base des puissances spectrales de brouillage dans la bande de fréquences respective pour laquelle sont conçus les modules d'entrée/sortie radio (6), par la caractérisation des canaux individuels de la bande de fréquences avec un codage binaire comme étant des canaux non brouillés ou brouillés et par la transmission du modèle de canal défini par le codage binaire des canaux d'une bande de fréquences pour la comparaison à un modèle de canal source de brouillage stocké (CP) à une unité de caractérisation de source de brouillage qui est connectée par l'intermédiaire d'un bus de données (3) aux modules d'entrée/sortie (2).

4. Procédé selon l'une des revendications précédentes, **caractérisé par** la détection du type d'une source de brouillage sur la base de l'évolution des canaux brouillés.

5. Procédé selon l'une des revendications précédentes, **caractérisé par** la détection du type de source de brouillage sur la base de la largeur de la bande de fréquences d'une suite de canaux adjacents les uns aux autres brouillés en continu.

6. Unité de détection de sources de brouillage (9) comprenant une unité de comparaison (12), une mémoire de données (11) et une unité de communication à bus de données (10) conçue pour la communication de données au moyen de modules d'entrée/sortie radio (6) d'un dispositif d'automatisation (1) par l'intermédiaire d'un bus de donnée (3), **caractérisée en ce que** l'unité de communication à bus de données (10) est en outre conçue pour lire des modèles de canaux stockés à l'instant présent dans des listes de canaux (CL) de modules d'entrée/sortie radio connectés, lesquels modèles caractérisent la disponibilité de canaux de transmission pour la transmission de données radio, et **en ce que** l'unité de comparaison (12) est conçue pour comparer la disponibilité de la suite de canaux à un certain nombre de modèles de canaux sources de brouillage (CP) différents stockés pour un certain nombre de sources de brouillage différentes et détecter une source de brouillage lorsque le modèle de canal défini par la disponibilité de la suite de canaux présente une ressemblance minimale prédéterminée à l'un des modèles de canaux sources de brouillage (CP) stockés.

7. Unité de détection de sources de brouillage (9) selon la revendication 6, **caractérisée en ce que** l'unité de comparaison (12) est en outre conçue pour déterminer le type d'une source de brouillage parmi des types connus de sources de brouillage qui sont associés aux modèles de canaux sources de brouillage stockés (CP) .

8. Unité de détection de sources de brouillage (9) selon la revendication 6 ou 7, **caractérisée en ce que** l'unité de comparaison (12) est conçue pour comparer des modèles de canaux codés de manière binaire, dans lequel un canal individuel est **caractérisé** pour la bande de fréquences par un codage binaire comme étant non brouillé ou brouillé et **en ce que** le brouillage est défini par la puissance spectrale de brouillage dans la bande de fréquences respective.

9. Unité de détection de sources de brouillage (9) selon l'une des revendications 6 à 8, **caractérisée en ce que** l'unité de comparaison (12) est conçue pour détecter le type d'une source de brouillage sur la base de l'évolution spectrale des canaux brouillés.

10. Unité de détection de sources de brouillage (9) selon l'une des revendications 6 à 9, **caractérisée en ce que** l'unité de comparaison (12) est conçue pour détecter le type d'une source de brouillage sur la base de la largeur de la bande de fréquences d'une série de canaux consécutifs brouillés en continu.
